# EUROPEAN PATENT APPLICATION

(11) **EP 1 533 595 A2**
(43) Date of publication of application: **25.05.2005**
(21) Application number: 04022151.7
(22) Date of filing: 17.09.2004
(51) Int. Cl.: G01F 1/00, G01F 1/26, G05D 7/00

(54) **Flow regulator with flow rate meter**

(30) Priority: 24.11.2003 IT MI20030545
(71) Applicant: Caleffi S.p.A., 28010 Fontaneto d'Agogna, Novara (IT)
(72) Inventor: Caleffi, Marco, 28021 Borgomanero Novara (IT)
(74) Representative: Coloberti, Luigi

(57) **Abstract**

A flow regulator and flow rate meter device for manifolds in heating systems; the device comprises a tubular casing (14) which can be screwed into the manifold body (10) in a position axially aligned to a branched duct (12); a plug (17) is movable with respect to a valve seat (18), and is screwably supported inside the tubular casing (14) between a forward closed position and backward open positions. A handgrip (25) of transparent plastic material, is operatively connected to the plug (17), while a flow rate indicator rod (26) is made visible and slides within the handgrip (25); the rod (26) penetrates into the branched duct (12) and is provided with a disk (27) subject to the entraining action of the flow. The plug (17) and the valve seat (18) are provided with opposite surfaces (17', 18') which extend axially into the branched duct (12), towards an annular shoulder (18") for diverting the flow against the disk (27) of the rod (26).

## Description

### BACKGROUND OF THE INVENTION

This invention relates to a valve device for regulating and measuring the flow rate of a fluid, particularly suitable for use in branched ducts of manifolds or pipings in heating systems, in order to regulate the flow rate of the thermal fluid and to provide a visual indication of the value of the regulated flow.

### STATE OF THE ART

In general, a flow regulator and flow rate meter device suitable for heating systems, comprises a tubular casing which can be screwed into a manifold or pipe, in a position aligned with a branched duct having a valve seat provided inside the same manifold or pipe; a plug member is axially movable with respect to the valve seat, and is screwably supported inside the tubular casing of the flow regulator, to be moved between a forward position for closing the valve seat, and backward open positions for regulating the flow; a flow rate meter, in turn comprises a tubular handgrip of transparent plastic material operatively connected to the plug member, and a flow rate indicator rod made visible inside the transparent handgrip for controlling the position of the plug; the flow rate indicator rod axially extends through the plug member, into the branched duct, and is provided at the fore end with a small disk member subject to the entraining action of the fluid, against the action of a biasing spring.

Flow regulator and flow rate meter devices are illustrated, for example, in FR-A-2.703.425 and in EP-A-1,321,746.

In flow regulator and flow rate meter devices of the aforementioned kind, there is a need to improve the regulation accuracy and indication of the flow rate for variable values, in the region of a few litres a minute, while maintaining the possibility of a very fine and precise regulation of the flow rate, by manually operating on the control handgrip.

### SCOPES OF THE INVENTION

The main scope of this invention is to provide a flow regulator and flow rate meter device, of the aforementioned kind, whereby it is possible to adequately solve the aforementioned problems.

A further scope of this invention is to provide a flow regulator and flow rate meter device, which is highly reliable, allows a fine regulation, and provides a clear and precise indication of the regulated flow rate by means of a structurally simple and inexpensive solution.

### BRIEF DESCRIPTION OF THE INVENTION

The foregoing can be achieved by means of a flow regulator and flow rate meter device according to claim 1.

More in particular, according to the invention a flow regulator and flow rate meter device for manifold in heating systems has been provided, the manifold comprising a tubular body defining a flow path having at least one branched out duct, the flow regulator and flow rate meter device comprising:
a tubular casing to be screwed into the manifold body in an aligned position with the branched out duct;
a plug member axially extending from the tubular casing into a valve seat at an inner end of the branched out duct, said plug member being screwably adjustable between a forward advanced position, against the valve seat to close the branched out duct, and backward open positions to regulate the fluid flow;
a tubular handgrip of transparent plastic material operatively connected to the plug member;
a flow rate indicator including a slidable rod member having a disk member at a fore end,
said rod member axially extending into the handgrip, through the plug member, and into the branched out duct to be subjected to the entraining action of the fluid flow and to the reaction of a biasing spring,
characterised in that the valve seat and the plug member comprise axially extending and conically diverging facing surfaces, to provide an adjustable flow path; and
flow-deviating surface means are provided to deviate the fluid flow towards a disk shaped member at the fore end of the valve seat inside the branched out duct.

The valve seat is preferably in the form of a cylindrical seat at a basket-shaped portion of the branched out duct, said basked-shaped portion being in communication with the flow path of the manifold, through side holes.

According to a further feature of the invention, the branched out duct with the basket-shaped portion and the valve seat are in the form of a separate tubular member, tightly fitted between axially aligned connectors at opposite sides of the manifold.

### BRIEF DESCRIPTION OF THE DRAWINGS

These and further features of the flow regulator and flow rate meter device according to the invention, will be more clearly evident from the following description with reference to the accompanying drawings, in which:
Fig. 1 is a sectional view, in correspondence with a branched duct of a manifold;
Fig. 2 shows an enlarged detail of the plug member and valve seat of Fig. 1;
Fig. 3 shows a detail of the handgrip for the flow regulator and flow meter device.

### DETAILED DESCRIPTION OF THE INVENTION

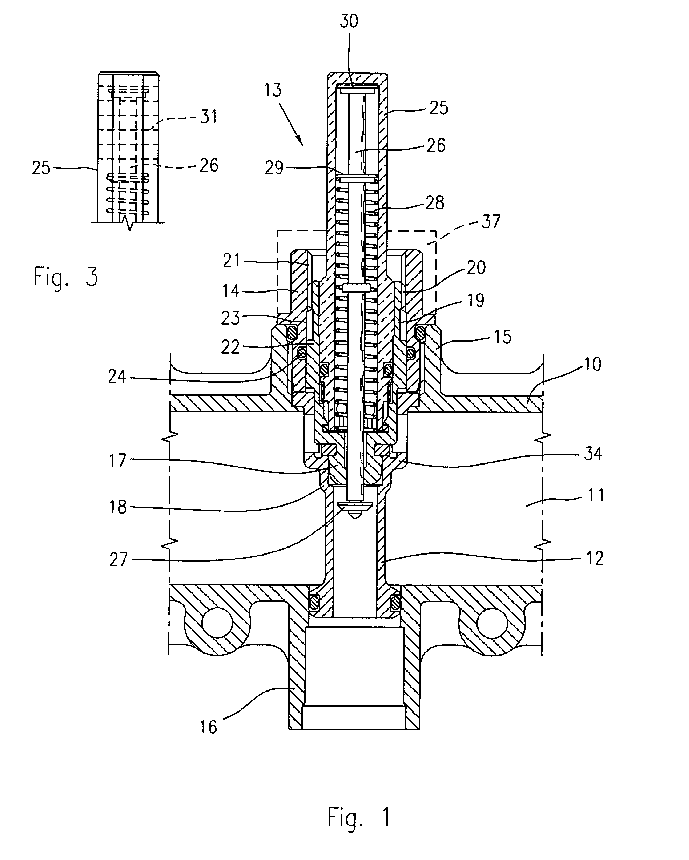

In Fig. 1, reference 10 indicates the tubular body of a manifold, for example for the distribution of hot water in heating systems; the manifold 10 has a main flow path 11 and at least one branched out duct 12 by means of which a first connector 16 of the manifold 10 may be connected to a user, for example to a panel type heating system or to a heating element of conventional type.

In Fig. 1, reference 13 has been used to indicate the assembly of a flow regulator and flow rate meter device.

More precisely, the flow regulator comprises a tubular casing 14 tightly screwed into a second connector 15 provided on one side of the manifold 10, in a position axially aligned with the first connector 16 on a side opposite to the previous one.

The flow regulator also comprises a plug member 17 screwably adjustable and axially movable with respect to a valve seat 18 at the inner end of the branched duct 12 is inside the manifold 10.

The plug member 17 is provided with a guide sleeve 19 having a screw thread 20 engaging with a corresponding screw thread 21 in the tubular casing 14.

The sleeve 19, in an intermediate position between the plug member 17 and the screw thread 20, is provided with a cylindrical guide portion 22 to slide along a guide surface 23 inside the tubular casing 14. The necessary seal is provided by an O-ring 24 seated into a circular slot of the casing 14.

The screwing of the sleeve 19 and the axial movement of the plug 17 with respect to the valve seat 18, are achieved by operating an elongated handgrip 25, made of transparent plastic material, operatively connected to the plug 17; the handgrip 25 extends beyond the sleeve 19, and is provided at the upper end portion with a flow rate scale 31, as shown in fig. 3.

Inside the handgrip 25 slides, a flow rate indicator in the form of a rod member 26 made visible through the same handgrip 25.

More precisely, the rod member 26 axially extends inside the handgrip 25, through a guide hole of the plug 17, and into the branched duct 12; a disk shaped member 27 subject to the entraining action of the fluid flow is provided at the fore end of the rod 26 in the branched duct 12.

A counter acting biasing spring 28 is disposed between a bottom wall of the sleeve 19, and an intermediate disk member 29 of the rod 26, to move back the latter into its fully retracted position, against the entraining action of the fluid flowing into the branched duct 12.

On its rear end the rod 26 is provided with a third disk member 30 visible from the outside of the handgrip 25, to provide an indication of the value of the regulated flow rate, on the scale 31 of the control handgrip 25, as shown in Fig. 3.

Suitable annular gaskets provide a seal between the upper connector 15 and the tubular casing 14, between the latter and the sleeve 19, and between the sleeve 19 and a corresponding cylindrical portion of the control handgrip 25.

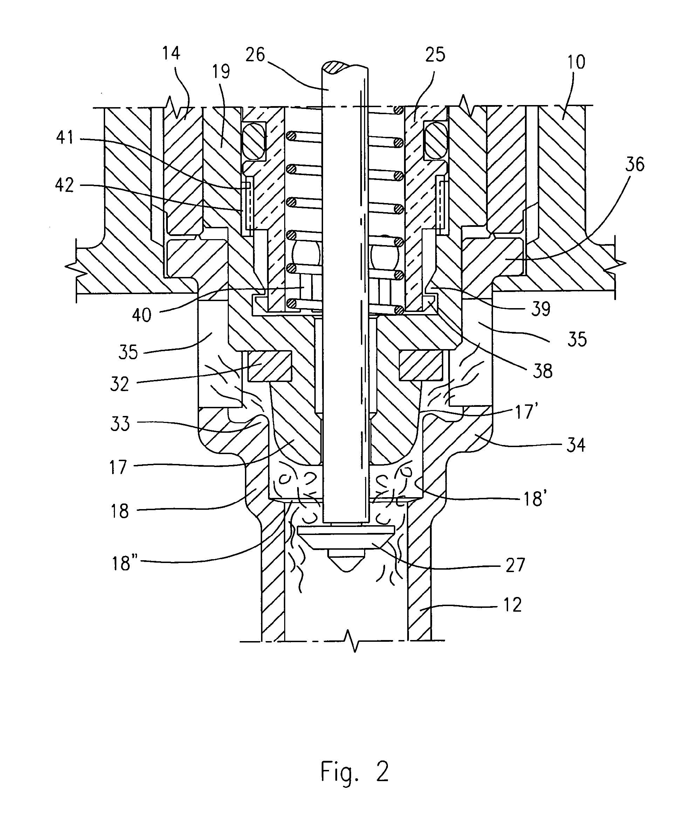

The enlarged detail of Fig. 2 shows the main feature of the flow regulator and flow rate meter device according to the invention.

In order to allow a gradual and fine regulation of the flow through a conical gape between the plug 17 and the valve seat 18, both plug 17 and seat 18 have opposite surfaces 17', 18', axially extending at the rear or inlet end of the branched duct 12.

More precisely, the valve seat 18 has a cylindrical internal surface 18', which axially extends for a substantial length greater or slightly shorter than its radius of curvature, so as to allow a large regulating stroke.

Correspondingly, the plug 17 has an external conical surface with a tapering ratio in the region of a few degrees, which extends for an equal length. A gasket 32 is provided at the rear side of the plug 17, enabling the flow regulator to be closed against the rear edge 33 of the seat 18, a seating 33 in the totally advanced position of the plug 17.

In order to ensure an efficacious entraining action of the flow rate indicator rod 26 for very low flow rates also, the cylindrical surface 18' of the valve seat 18 is provided at the fore end with an annular shoulder surface 18'' capable of diverting the fluid flow radially towards the inside, against the disk member 27, said annular shoulder surface 18'' being slanted towards the disk 27.

By means of this solution, and by adopting a sufficiently fine pitch for the screw threads 20 and 21, it is possible to achieve a satisfactory and accurate control and regulation of the flow, and a high degree of precision in measuring the flow rate, along the entire regulating stroke of the plug 17.

Still with reference to the figures, in particular Fig. 2, it can be seen that the valve seat 18 is provided in a basket-like portion 34, which extends at the upper or inlet end of the branched duct 12; the basket 34 is provided with side apertures 35, which communicate with the flow path 11 of the manifold 10.

The basket 34 ends at the upper end with a flange 36 to rest against a shoulder of the manifold 10, in correspondence with the connector 15.

From fig. 1 it can be seen that the branched duct 12 with the basket 34, is in the form of a separate piece tightly disposed through aligned apertures in the manifold 10, in correspondence with the connectors 15 and 16; an annular gasket provides the necessary seal between the connector 16 and the branched duct 12, while the latter is locked in position by the tubular casing 14 screwed into the connector 15 of the manifold.

According to a still further feature of the flow regulator and flow meter device of this invention, the handgrip 25 is provided, on at least one side, with a flat surface, or is of polygonal shape so as enable the application, by simple insertion, of a cap 37 having a passing through hole for locking the rotation of the control handgrip 25.

The cap 37 can be provided with teeth for snap coupling with the casing 14 of the regulator; moreover, the two contact surfaces, that is the inner surface of the cap 37 and the outer surface of the upper portion of the casing 14, have a polygonal shape or flat matching surfaces.

The control handgrip 25 is operatively connected to the plug 17 for rotation and axial sliding movement of the latter. In this connection, as shown in the enlarged detail of figure 2, the control handgrip 25, on its lower end is provided with a toothing 38 for snap engaging onto a corresponding toothing 39 inside the sleeve 19, close to the plug 17, to prevent it from slipping out. The two toothings 38, 39 have opposite slanted surfaces, which facilitate the insertion and snap coupling due to the elastic yielding of the lower end of the control handgrip, made possible by one or more longitudinal slits 40.

The engagement of the control handgrip 25 with the sleeve 19 of the plug, to cause its rotation, is made possible by a radial tooth 41 on the guide portion 22, engaging with a slot or corresponding teeth 42 on the sleeve 19, or in any other way.

From what has been described and shown with reference to the accompany drawings, it is evident that a flow regulator and a flow rate meter device has been provided capable of achieving the previously defined scopes. It is understood however that what has been described and shown with reference to the accompanying drawings has been given purely by way of example and in no way restrictive of scope of the accompanying claims.

## Claims

1. Flow regulator and flow rate meter device for manifold in heating systems, the manifold comprising a tubular body (10) defining a flow path (11) having at least one branched out duct (12), the flow regulator and flow rate meter device comprising:
a tubular casing (14) to be screwed into the manifold body (10) in an aligned position with the branched out duct (12);
a plug member (17) axially extending from the tubular casing (14) into a valve seat (18) at an inner end of the branched out duct (12), said plug member (17) being screwably adjustable between a forward advanced position, against the valve seat (18) to close the branched out duct (12), and backward open positions to regulate the fluid flow;
a tubular handgrip (25) of transparent plastic material operatively connected to the plug member (17);
a flow rate indicator including a slidable rod member (26) having a disk member (27) at a fore end,
said rod member (26) axially extending into the handgrip (25), through the plug member (17), and into the branched out duct (12) to be subjected to the entraining action of the fluid flow and the reaction of a biasing spring (28),
**characterised in that** the valve seat (18) and the plug member (17) comprise axially extending and conically diverging facing surfaces (17', 18'), to provide an adjustable flow path; and
flow-deviating surface means (18") to deviate the fluid flow towards a disk shaped member (27) at the fore end of the valve seat (18) inside the branched out duct (12).

2. Flow regulator and flow rate meter device according to claim 1, **characterised in that** the valve seat (18) comprises a inner cylindrical surface (18'), while the plug (17) is provided with an outer conical surface (17') axially extending at the inlet side of the branched duct (12).

3. Flow regulator and flow rate meter device according to claim 2, **characterised in that** the valve seat (18) is provided in a basket-like portion of the branched duct (12).

4. Flow regulator and flow rate meter device according to claim 3, **characterised in that** the branched duct (12) and the basket-like portion (34) are in the form of a separate piece, tightly fitted into axially aligned connectors (15, 16) at opposite sides of the manifold (10).

5. Flow regulator and flow rate meter device according to claim 1, **characterised in that** the annular shoulder surface (18'') for diverting the fluid flow is slanting towards the disk member (27) of the flow indicator rod (26) inside the branched duct (12).

6. Flow regulator and flow rate meter device according to claim 1, **characterised by** comprising disengageable stop means (37), for preventing rotation of the control handgrip (25).

7. Flow regulator and flow rate meter device according to claim 6, **characterised in that** the stop means comprise a cap (37) which can be fitted onto the control handgrip (25), the cap (37), the handgrip (25) and the tubular casing (14) being provided with toothings or flat matching surfaces.

8. Flow regulator and flow rate meter device according to claim 7, **characterised in that** the cap (37) is provided with a through hole for the control handgrip (25), and **in that** the control handgrip (25) and the passing through hole of the cap (37) are provided with polygonally shaped matching surfaces.

9. Flow regulator and flow rate meter device according to claim 1, **characterised in that** the control handgrip (25) and the sleeve (19) of the plug (17) are provided with snap engaging toothings (38, 39).
